# FASCICULE DE BREVET EUROPEEN

(11) **EP 0 918 386 B1**
(45) Date de publication et mention de la délivrance du brevet: **20.02.2002**
(21) Numéro de dépôt: 98402893.6
(22) Date de dépôt: 20.11.1998
(51) Int. Cl.: H02B 1/46, F16B 41/00, H02B 1/03

(54) **Couvercle à plomber, en particulier platine de support pour disjoncteur**
Plombe gesicherte Abdeckung, insbesondere Trägerplatte für einen Schutzschalter
Lead sealable cover, in particular for a circuit-breaker support plate

(30) Priorité: 24.11.1997 FR 9714730
(43) Date de publication de la demande: 26.05.1999
(73) Titulaire: LEGRAND, F-87000 Limoges (FR); LEGRAND SNC, F-87000 Limoges (FR)
(72) Inventeur: Nicolas, Yves, 87480 Saint Priest Taurion (FR)
(74) Mandataire: CABINET BONNET-THIRION

(56) Documents cités:
- DE-A- 2 339 186
- DE-U- 7 016 906
- FR-A- 2 615 667

## Description

La présente invention concerne d'une manière générale les couvercles à plomber, c'est-à-dire les couvercles comportant, pour leur fixation à un quelconque socle, une paroi de fixation sur laquelle débouche au moins un puits propre au passage d'un quelconque moyen de fixation, une vis par exemple, avec, associé à ce puits, un dispositif de plombage propre à en garantir l'inviolabilité.

Elle vise plus particulièrement, mais non nécessairement exclusivement, le cas où un tel couvercle constitue une platine de support pour un disjoncteur.

Le mot "couvercle" doit donc ici être entendu dans un sens large.

A ce jour, le dispositif de plombage équipant un couvercle formant une platine de support pour un disjoncteur comporte des plots, qui viennent de moulage avec ce couvercle, à la faveur de lumières prévues pour le passage de câbles, et qui, comportant chacun une oreille de plombage, sont à rapporter sur les puits dans lesquels interviennent les vis de fixation.

De tels plots ont donné, et peuvent encore donner, satisfaction, mais, après leur mise en oeuvre, il subsiste, dans le couvercle, au droit de l'implantation initiale des oreilles de plombage correspondantes, des évidements de moulage préjudiciables à l'isolation par ailleurs requise.

Dans d'autres réalisations également connues, des obturateurs, ou bouchons, qui sont moulés indépendamment du couvercle, sont à rapporter par encliquetage sur celui-ci, chacun d'eux s'engageant alors sur une oreille de plombage venue de moulage avec la paroi du puits correspondant.

Mais, du fait, notamment, de l'encliquetage à assurer, une telle réalisation est relativement complexe et délicate à mettre en oeuvre.

La présente invention a d'une manière générale pour objet une disposition permettant d'éviter ces inconvénients.

De manière plus précise, elle a pour objet un couvercle du genre comportant, pour sa fixation à un quelconque socle, une paroi de fixation sur laquelle débouche au moins un puits propre au passage d'un quelconque moyen de fixation, avec, associé à ce puits, un dispositif de plombage propre à en garantir l'inviolabilité, ce couvercle étant d'une manière générale caractérisé en ce que le dispositif de plombage comporte, sur la paroi de fixation, d'une part, au débouché du puits, un logement de contour globalement circulaire, qui présente, latéralement, un prolongement, et à la base duquel intervient, à compter de ce prolongement, et parallèlement à la paroi de fixation, une saignée, et, d'autre part, un évidement, qui communique avec la saignée à distance du prolongement du logement, ce dispositif de plombage comportant, en outre, un obturateur, dont le contour est globalement complémentaire de celui du logement, et qui présente, latéralement, à sa base, une patte de contour inférieur à celui du prolongement de ce logement et d'épaisseur inférieure à celle de la saignée qui communique avec ce prolongement, cet obturateur comportant, lui-même, à compter de sa surface de façade, pour le passage d'un fil de plombage, un évidement, qui débouche sur sa surface latérale, et qui est ainsi apte à être en communication avec l'évidement de la paroi de fixation, lorsque, après avoir été mis en place dans le logement que présente celle-ci, l'obturateur est tourné dans ce logement.

En bref, grâce à la disposition suivant l'invention, la mise en place d'un obturateur se fait avantageusement suivant un montage du type montage quart de tour, et, au terme de cette mise en place, il ne subsiste, sur le couvercle, aucun évidement susceptible de nuire à l'isolation à respecter.

Il en résulte globalement, une grande simplicité de mise en oeuvre et une grande efficacité.

Les caractéristiques et avantages de l'invention ressortiront d'ailleurs de la description qui va suivre, à titre d'exemple, en référence aux dessins schématiques annexés sur lesquels :
la figure 1 est, avec une partie éclatée, une vue en perspective d'un couvercle suivant l'invention équipé d'un dispositif de plombage au débouché de chacun des puits de fixation qu'il comporte ;
la figure 2 est, à échelle supérieure, une vue partielle en élévation de face de ce couvercle et d'un de ses dispositifs de plombage, suivant la flèche II de la figure 1 ;
la figure 3 est, à l'échelle de la figure 2, une vue partielle en coupe transversale de l'ensemble, suivant la ligne III-III de la figure 1 ;
la figure 4 est, suivant l'orientation de la figure 3, une vue partielle en coupe transversale du seul couvercle, sans un quelconque dispositif de plombage ;
la figure 5 est, dans les mêmes conditions, une autre vue partielle en coupe transversale de ce couvercle, suivant la ligne V-V de la figure 1 ;
la figure 6 est, suivant l'orientation et l'échelle de la figure 5, et tel que repéré par la ligne VI-VI sur la figure 1, une vue en coupe axiale d'un obturateur associé à ce couvercle pour la constitution d'un dispositif de plombage ;
la figure 7 est, à échelle supérieure, une vue en perspective de cet obturateur, vu de dessus ;
la figure 8 est une autre vue en perspective de cet obturateur, vu de dessous, suivant la flèche VIII de la figure 7.

Telle qu'illustrée sur ces figures, la présente invention concerne un quelconque couvercle 10, à rapporter sur un quelconque socle 11 et à plomber sur celui-ci.

Il peut s'agir, par exemple, d'une platine de support pour disjoncteur à rapporter sur un tableau d'abonné.

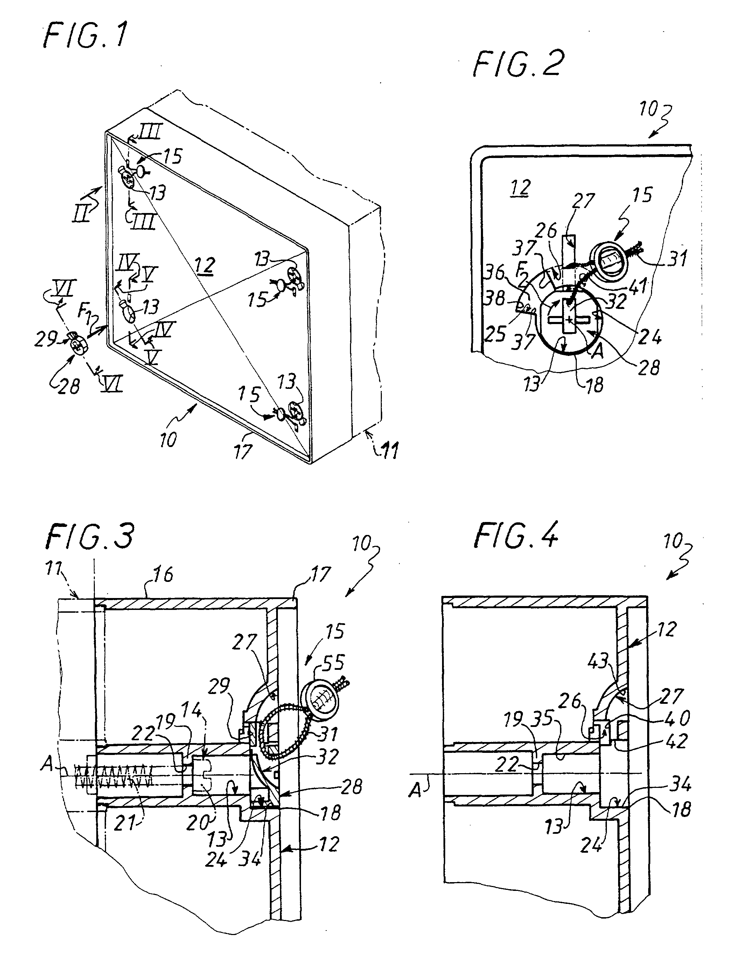

Le socle 11 ne relevant pas, de toute façon, de la présente invention, il n'a a été que partiellement schématisé, en traits interrompus, sur les figures 1 et 3, et il ne sera pas décrit ici.

Le couvercle 10 ne sera pas non plus décrit dans tous ses détails ici.

En particulier, il comporte, lorsqu'il s'agit d'une platine de support pour disjoncteur, des passages de câbles qui ont volontairement été omis sur les figures.

C'est d'ailleurs la raison pour laquelle, sur la figure 1, la paroi de façade du couvercle 10 a été globalement occultée par un X.

Seuls seront donc décrits dans ce qui suit les éléments du couvercle 10 nécessaires à la compréhension de l'invention.

De manière connue en soi, le couvercle 10 comporte, pour sa fixation au socle 11, une paroi de fixation 12 sur laquelle débouche au moins un puits 13 propre au passage d'un quelconque moyen de fixation 14, et, par exemple, d'une quelconque vis, tel que schématisé en traits interrompus sur la figure 3, avec, associé à ce puits 13, un dispositif de plombage 15 propre à en garantir l'inviolabilité.

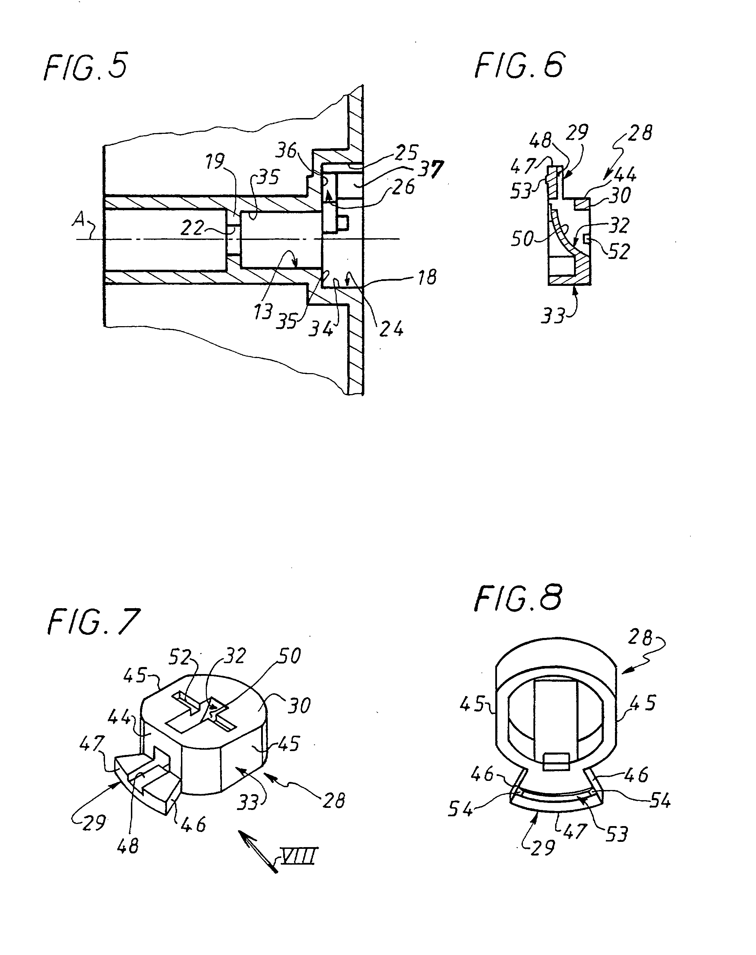

Soit A l'axe d'un tel puits 13, tel que repéré par sa trace sur la figure 2 et tel que schématisé en traits interrompus sur les figures 3, 4 et 5.

Dans la forme de réalisation représentée, la paroi de fixation 12 du couvercle 10 est sa paroi de façade, et, en plan, elle a un contour rectangulaire, avec, dans chacune de ses zones d'angle, un puits 13 auquel est associé un dispositif de plombage 15.

Mais, dans la pratique, il peut n'être prévu un tel dispositif de plombage 15 que pour l'un des quatre puits 13 que comporte ainsi le couvercle 10.

Dans la forme de réalisation représentée, la paroi de fixation 12 de ce couvercle 10 comporte, à sa périphérie, du côté de sa surface interne, un bord tombé 16, et, en continuité avec ce bord tombé 16, du côté de sa surface externe, un rebord 17.

Dans la forme de réalisation représentée, chacun des puits 13 est recoupé, transversalement, à distance de son débouché 18, par une paroi transversale 19, qui est propre à l'appui de la tête 20 du moyen de fixation 14 correspondant, et qui, pour le passage du fût 21 de celui-ci, présente un perçage 22.

Les dispositions correspondantes étant bien connues par elles-mêmes, et ne relevant pas de la présente invention, elles ne seront pas décrites plus en détail ici.

Suivant l'invention, le dispositif de plombage 15 associé à l'un au moins des puits 13 comporte, sur la paroi de fixation 12 du couvercle 10, d'une part, au débouché 18 de ce puits 13, un logement 24, de contour globalement circulaire, qui présente, latéralement, un prolongement 25, et, à la base duquel, intervient, à compter de ce prolongement 25, et parallèlement à la paroi de fixation 12, une saignée 26, et, d'autre part, à l'écart du logement 24, un évidement 27, qui communique avec la saignée 26 à distance du prolongement 25 du logement 24.

Ce dispositif de plombage 15 comporte, en outre, sous la forme d'une pièce indépendante de la paroi de fixation 12 du couvercle 10, un obturateur 28, dont le contour est globalement complémentaire de celui du logement 24 de cette paroi de fixation 12, et qui présente, latéralement, à sa base, une patte 29 de contour inférieur à celui du prolongement 25 de ce logement 24 et d'épaisseur inférieure à celle de la saignée 26 qui communique avec ce prolongement 25, cet obturateur 28 comportant, lui-même, à compter de sa surface de façade 30, pour le passage d'un fil de plombage 31, un évidement 32, qui débouche sur sa surface latérale 33, et qui est ainsi apte à être en communication avec l'évidement 27 de la paroi de fixation 12 du couvercle 10 lorsque, après avoir été mis en place dans le logement 24 que présente celle-ci, l'obturateur 28 est tourné dans ce logement 24, par rotation autour de l'axe A du puits 13 correspondant.

En pratique, le logement 24 que présente la paroi de fixation 12 du couvercle 10 est formé par un épanouissement du puits 13.

Abstraction faite du prolongement 25, sa paroi latérale 34 est cylindrique, et son axe est confondu avec l'axe A du puits 13.

Conjointement, son fond 35 est perpendiculaire à cet axe A.

Dans la forme de réalisation représentée, le prolongement 25 est à niveau avec ce fond 35.

Autrement dit, son propre fond 36 est en continuité avec celui-ci.

Dans la forme de réalisation représentée, le prolongement 25 du logement 24 s'étend globalement suivant un segment circulaire.

Il est délimité, latéralement, par deux flancs 37 droits, qui s'étendent sensiblement radialement par rapport au puits 13, et, circonférentiellement, par un flanc 38 cylindrique, dont l'axe est confondu avec l'axe A de ce puits 13.

Dans la forme de réalisation représentée, la saignée 26 est elle-même à niveau avec le fond 36 du prolongement 25 du logement 24.

Mais, pour des raisons de moulage, c'est-à-dire pour permettre le moulage de son toit 40, elle est dépourvue de plancher dans cette forme de réalisation.

Autrement dit, dans la forme de réalisation représentée, la saignée 26 ne présente pas par elle-même un quelconque fond en continuité avec le fond 36 du prolongement 25 du logement 24.

Comme ce prolongement 25, la saignée 26 s'étend suivant un segment circulaire, et, en pratique, l'angle-au-centre qui la sous-tend est du même ordre de grandeur que celui qui sous-tend ce prolongement 25.

Il s'agit par exemple, d'un angle-au-centre supérieur à 45°.

En pratique, également, l'extrémité 41 de la saignée 26 opposée au prolongement 25 du logement 24 forme une butée pour l'obturateur 28 lorsque l'évidement 32 de celui-ci est au droit de l'évidement 27 que présente la paroi de fixation 12 du couvercle 10.

Dans la forme de réalisation représentée, le toit 40 de la saignée 26 présente, par ailleurs, en creux, une rainure 42, qui s'étend, sensiblement radialement, du logement 24 de la paroi de fixation 12 du couvercle 10 à l'évidement 27 de celle-ci.

Dans la forme de réalisation représentée, l'évidement 27 de la paroi de fixation 12 du couvercle 10 est une rainure, qui s'étend sensiblement radialement par rapport au puits 13, et dont le fond 43 est globalement concave.

Plus précisément, de la surface supérieure de la paroi de fixation 12 à la saignée 26, le fond 43 de la rainure formant cet évidement 27 est continûment cintré.

Dans la forme de réalisation représentée, il recoupe la saignée 26 sensiblement à mi-hauteur de celle-ci.

Préférentiellement, et tel que représenté, il s'étend alors sensiblement perpendiculairement à l'axe A du puits 13.

Dans la forme de réalisation représentée, la surface latérale 33 de l'obturateur 28 est globalement cylindrique.

Elle présente, cependant, trois méplats, à savoir, un méplat 44 au droit de sa patte 29, et, en croix avec ce méplat 44, deux méplats 45.

A l'image du prolongement 25 du logement 24 de la paroi de fixation 12 du couvercle 10, et à l'image de la saignée 26 communiquant avec ce prolongement 25, la patte 29 de l'obturateur 28 s'étend, globalement, suivant un segment circulaire, et l'angle-au-centre qui la sous-tend est du même ordre de grandeur que ceux sous-tendant ce prolongement 25 et cette saignée 26.

En pratique, cette patte 29 est délimitée, latéralement, par deux flancs 46 droits, qui s'étendent sensiblement radialement, et, circonférentiellement, par un flanc 47 cylindrique, qui en forme le bord libre, et dont l'axe est confondu avec celui de la surface latérale 33.

Dans la forme de réalisation représentée, l'évidement 32 que présente l'obturateur 28 débouche sur la surface latérale 33 de celui-ci au droit de sa patte 29, et, sur cette patte 29, il se prolonge par une rainure 48.

Dans la forme de réalisation représentée, cet évidement 32 de l'obturateur 28 est lui-même une rainure, qui s'étend sensiblement diamétralement, et dont le fond 50 est globalement concave.

Plus précisément, ce fond 50 est continûment cintré à compter de la surface de façade 30 de l'obturateur 28, et, à son extrémité opposée à celle-ci, il s'étend sensiblement perpendiculairement à l'axe de la surface latérale 33 de l'obturateur 28, et, donc, sensiblement perpendiculairement à l'axe A du puits 13 lorsque l'obturateur 28 est en place dans celui-ci.

Dans la forme de réalisation représentée, l'évidement 32 de l'obturateur 28 est recoupé, en croix, par une rainure 52, pour permettre une commande en rotation de cet obturateur 28 du type de celle à appliquer à une vis.

Enfin, dans la forme de réalisation représentée, l'obturateur 28 présente, en saillie, au dos de sa patte 29, une nervure 53, qui s'étend sensiblement parallèlement au bord libre de celle-ci, à distance de ce bord libre, et qui, donc, dans la forme de réalisation représentée, s'étend suivant un segment circulaire, à la manière du flanc 47 cylindrique formant ce bord libre.

Préférentiellement, et tel que représenté, cette nervure 53 est biseautée par un chanfrein 54 à chacune de ses extrémités.

Une fois le couvercle 10 rapporté par des moyens de fixation 14 sur son socle 11, il peut être mis en place un dispositif de plombage 15 au débouché 18 de l'un au moins des puits 13 correspondants.

Pour ce faire, il est par exemple procédé comme suit.

Dans un premier temps, et tel que schématisé par une flèche F1 sur la figure 1, un obturateur 28 est engagé axialement dans le logement 24 présent au débouché 18 d'un tel puits 13, en engageant, conjointement, sa patte 29 dans le prolongement 25 de ce logement 24.

Dans un deuxième temps, et tel que schématisé par une flèche F2 sur la figure 2, il est procédé à une rotation de l'obturateur 28 dans le logement 24 conduisant la patte 29 de cet obturateur 28 à s'engager dans la saignée 26 avec laquelle est en communication le prolongement 25 du logement 24.

La rotation correspondante, qui est assimilable à celle d'un montage quart de tour, conduit l'obturateur 28 à venir en butée, par sa patte 29, contre l'extrémité 41 de la saignée 26 opposée au prolongement 25 du logement 24.

Ainsi qu'il est aisé de le comprendre, la nervure 53 que la patte 29 de l'obturateur 28 présente à son dos, jusque-là en contact avec le fond 36 du prolongement 25 du logement 24, et donc plus ou moins contrainte par celui-ci, permet, avantageusement, de signaler, par sa libération, que l'obturateur 28 est en position de fin de course.

Elle assure, en outre, avantageusement, un certain verrouillage de cet obturateur 28 dans cette position de fin de course, par coopération de ses extrémités circonférentielles avec le bord libre du fond 36 qu'elle vient d'abandonner et avec celui de la paroi formant l'extrémité 41 de la saignée 26.

Quoi qu'il en soit, pour la position de fin de course alors atteinte par l'obturateur 28, l'évidement 32 de celui-ci se trouve sensiblement dans l'alignement de l'évidement 27 de la paroi de fixation 12 du couvercle 10, et, par le passage alors formé conjointement par la rainure 42 présente au toit 40 de la saignée 26 de cette paroi de fixation 12 et par la rainure 48 présente à la surface supérieure de la patte 29 de l'obturateur 28, il est en communication avec cet évidement 27.

Il suffit, dès lors, de faire passer à travers l'ensemble le fil de plombage 31 à poser, et à appliquer aux deux brins de celui-ci, dûment rassemblés à cet effet, un quelconque sceau de plombage 55.

Bien entendu, la présente invention ne se limite pas à la forme de réalisation décrite et représentée, mais englobe toute variante de réalisation.

Son domaine d'application ne se limite pas non plus à celui des platines de support pour disjoncteur, mais s'étend au contraire d'une manière plus générale à celui de n'importe quels couvercles à plomber sur un socle.

## Revendications

1. Couvercle du genre comportant, pour sa fixation à un quelconque socle, une paroi de fixation sur laquelle débouche au moins un puits propre au passage d'un quelconque moyen de fixation, avec, associé à ce puits, un dispositif de plombage propre à en garantir l'inviolabilité, **caractérisé en ce que** le dispositif de plombage (15) comporte, sur la paroi de fixation (12), d'une part, au débouché (18) du puits (13), un logement (24), de contour globalement circulaire, qui présente, latéralement, un prolongement (25), et à la base duquel intervient, à compter de ce prolongement (25), et parallèlement à la paroi de fixation (12), une saignée (26), et, d'autre part, un évidement (27), qui communique avec la saignée (26) à distance du prolongement (25) du logement (24), ce dispositif de plombage (15) comportant, en outre, un obturateur (28), dont le contour est globalement complémentaire de celui du logement (24), et qui présente, latéralement, à sa base, une patte (29) de contour inférieur à celui du prolongement (25) de ce logement (24) et d'épaisseur inférieure à celle de la saignée (26) qui communique avec ce prolongement (25), cet obturateur (28) comportant, lui-même, à compter de sa surface de façade (30), pour le passage d'un fil de plombage (31), un évidement (32), qui débouche sur sa surface latérale (33), et qui est ainsi apte à être en communication avec l'évidement (27) de la paroi de fixation (12) lorsque, après avoir été mis en place dans le logement (24) que présente celle-ci, l'obturateur (28) est tourné dans ce logement (24).

2. Couvercle suivant la revendication 1, **caractérisé en ce que** l'évidement (27) de la paroi de fixation (12) est une rainure, qui s'étend sensiblement radialement par rapport au puits (13), et dont le fond (43) est globalement concave.

3. Couvercle suivant l'une quelconque des revendications 1, 2, **caractérisé en ce que** la saignée (26) est dépourvue de plancher.

4. Couvercle suivant l'une quelconque des revendications 1 à 3, **caractérisé en ce que** le toit (40) de la saignée (26) présente, en creux, une rainure (42), qui s'étend du logement (24) de la paroi de fixation (12) à l'évidement (27) de celle-ci.

5. Couvercle suivant l'une quelconque des revendications 1 à 4, **caractérisé en ce que** l'extrémité (41) de la saignée (26) opposée au prolongement (25) du logement (24) que présente la paroi de fixation (12) forme une butée pour l'obturateur (28) lorsque l'évidement (32) de celui-ci est au droit de l'évidement (27) de cette paroi de fixation (12).

6. Couvercle suivant l'une quelconque des revendications 1 à 5, **caractérisé en ce que** l'évidement (32) de l'obturateur (28) débouche sur la surface latérale (33) de celui-ci au droit de sa patte (29).

7. Couvercle suivant la revendication 6, **caractérisé en ce que** l'évidement (32) de l'obturateur (28) se prolonge par une rainure (48) sur sa patte (29).

8. Couvercle suivant l'une quelconque des revendications 1 à 7, **caractérisé en ce que** l'évidement (32) de l'obturateur (28) est une rainure, qui s'étend sensiblement diamétralement, et dont le fond (50) est globalement concave.

9. Couvercle suivant la revendication 1, **caractérisé en ce que** l'évidement (32) de l'obturateur (28) est recoupé en croix par une rainure (52).

10. Couvercle suivant l'une quelconque des revendications 1 à 9, **caractérisé en ce que** l'obturateur (28) présente, en saillie, au dos de sa patte (29), une nervure (53), qui s'étend sensiblement parallèlement au bord libre de celle-ci, à distance de ce bord libre.

## Patentansprüche

1. Abdeckung, die für ihre Befestigung an einem beliebigen Sockel eine Befestigungswand aufweist, an der mindestens ein für den Durchgang eines beliebigen Befestigungsmittels geeigneter Schacht ausmündet, wobei diesem Schacht eine Plombiereinrichtung zugeordnet ist, die dafür ausgelegt ist, seine Unversehrtheit zu garantieren, **dadurch gekennzeichnet, dass** die Plombiereinrichtung (15) auf der Befestigungswand (12) einerseits an der Mündung (18) des Schachts (13) eine Aufnahme (24) mit global kreisförmigem Umriss aufweist, die seitlich eine Verlängerung (25) besitzt und an deren Basis von dieser Verlängerung (25) aus und parallel zur Befestigungswand (12) ein Einschnitt (26) vorgesehen ist, und andererseits eine Aussparung (27), die mit dem Einschnitt (26) in einem Abstand von der Verlängerung (25) der Aufnahme (24) in Verbindung steht, wobei diese Plombiereinrichtung (15) ferner ein Verschlusselement (28) aufweist, dessen Umriss global zu dem der Aufnahme (24) ergänzend ist und das seitlich an seiner Basis einen Lappen (29) aufweist, dessen Umriss kleiner als der der Verlängerung (25) dieser Aufnahme (24) ist und dessen Dicke kleiner als die des Einschnitts (26) ist, der mit dieser Verlängerung (25) in Verbindung ist, wobei dieses Verschlusselement (28) selbst von seiner Frontfläche (30) aus für den Durchgang eines Plombierdrahts (31) eine Aussparung (32) aufweist, die an seiner Seitenfläche (33) ausmündet und auf diese Weise dafür ausgelegt ist, mit der Aussparung (27) der Befestigungswand (12) in Verbindung zu stehen, wenn das Verschlusselement (28) nach Einsetzen in die Aufnahme (24), die diese aufweist, in dieser Aufnahme (24) gedreht wird.

2. Abdeckung nach Anspruch 1, **dadurch gekennzeichnet, dass** die Aussparung (27) der Befestigungswand (12) eine Nut ist, die sich im wesentlichen bezüglich des Schachts (13) radial erstreckt und deren Boden (43) global konkav ist.

3. Abdeckung nach einem der Ansprüche 1, 2, **dadurch gekennzeichnet, dass** der Einschnitt (26) keinen Boden aufweist.

4. Abdeckung nach einem der Ansprüche 1 bis 3, **dadurch gekennzeichnet, dass** das Dach (40) des Einschnitts (26) vertieft eine Nut (42) aufweist, die sich von der Aufnahme (24) der Befestigungswand (12) zu deren Aussparung (27) erstreckt.

5. Abdeckung nach einem der Ansprüche 1 bis 4, **dadurch gekennzeichnet, dass** das Ende (41) des Einschnitts (26), das der Verlängerung (25) der Aufnahme (24), die die Befestigungswand (12) aufweist, entgegengesetzt ist, einen Anschlag für das Verschlusselement (28) bildet, wenn dessen Aussparung (32) sich auf Höhe der Aussparung (27) dieser Befestigungswand (12) befindet.

6. Abdeckung nach einem der Ansprüche 1 bis 5, **dadurch gekennzeichnet, dass** die Aussparung (32) des Verschlusselements (28) auf dessen Seitenfläche (33) auf Höhe seines Lappens (29) ausmündet.

7. Abdeckung nach Anspruch 6, **dadurch gekennzeichnet, dass** die Aussparung (32) des Verschlusselements (28) durch eine Nut (48) auf dessen Lappen (29) verlängert ist.

8. Abdeckung nach einem der Ansprüche 1 bis 7, **dadurch gekennzeichnet, dass** die Aussparung (32) des Verschlusselements (28) eine Nut ist, die sich im wesentlichen diametral erstreckt und deren Boden (50) global konkav ist.

9. Abdeckung nach Anspruch 1, **dadurch gekennzeichnet, dass** die Aussparung (32) des Verschlusselements (28) kreuzförmig von einer Nut (52) geschnitten wird.

10. Abdeckung nach einem der Ansprüche 1 bis 9, **dadurch gekennzeichnet, dass** das Verschlusselement (28) auf der Rückseite seines Lappens (29) vorstehend eine Rippe (53) aufweist, die sich im wesentlichen parallel zu dessen freiem Rand und in einem Abstand von diesem erstreckt.

## Claims

1. A cover of the kind comprising, for fixing thereof to any base, a fixing wall at which there opens at least one shaft for the passage of any fixing means, with, in association with said shaft, a lead-sealing device capable of guaranteeing tamper-proof integrity thereof, **characterised in that** the lead-sealing device (15) comprises on the fixing wall (12) on the one hand, at the mouth opening (18) of the shaft (13), a recess (24) of generally circular contour which laterally has a prolongation portion (25) and at the base of which is disposed, starting from said prolongation portion (25) and in parallel relationship with the fixing wall (12), a groove (26), and on the other hand an opening (27) which communicates with the groove (26) at a spacing from the prolongation portion (25) of the recess (24), said lead-sealing device (15) further comprising a closure member (28) whose contour is generally complementary to that of the recess (24) and which laterally has at its base a lug (29) of a contour which is less than that of the prolongation portion (25) of said recess (24) and of a thickness which is less than that of the groove (26) which communicates with said prolongation portion (25), said closure member (28) itself comprising, from its front surface (30), for passing a lead-sealing wire (31), an opening (32) which opens at its lateral surface (33) and which is thus capable of being in communication with the opening (27) in the fixing wall (12) when, after having been placed in the recess (24) that the latter has, the closure member (28) is turned in the recess (24).

2. A cover according to claim 1 **characterised in that** the opening (27) of the fixing wall (12) is a slot which extends substantially radially with respect to the shaft (13) and the bottom (43) of which is generally concave.

3. A cover according to either one of claims 1 and 2 **characterised in that** the groove (26) is without a floor.

4. A cover according to any one of claims 1 to 3 **characterised in that** the top (40) of the groove (26) has in recessed relationship a slot (42) which extends from the recess (24) in the fixing wall (12) to the opening (27) thereof.

5. A cover according to any one of claims 1 to 4 **characterised in that** the end (41) of the groove (26) which is opposite to the prolongation portion (25) of the recess (24) that the fixing wall (12) has forms an abutment for the closure member (28) when the opening (32) thereof is in line with the opening (27) in said fixing wall (12).

6. A cover according to any one of claims 1 to 5 **characterised in that** the opening (32) of the closure member (28) opens at the lateral surface (33) thereof in line with its lug (29).

7. A cover according to claim 6 **characterised in that** the opening (32) in the closure member (28) is prolonged by a slot (48) on its lug (29).

8. A cover according to any one of claims 1 to 7 **characterised in that** the opening (32) in the closure member (28) is a slot which extends substantially diametrally and the bottom (50) of which is generally concave.

9. A cover according to claim 1 **characterised in that** the opening (32) in the closure member (28) is intercepted in a cross-configuration by a slot (52).

10. A cover according to any one of claims 1 to 9 **characterised in that** the closure member (28) has in projecting relationship on the back of its lug (29) a rib (53) which extends substantially parallel to the free edge thereof at a spacing from said free edge.
